# EUROPEAN PATENT APPLICATION

(11) **EP 3 754 209 A1**
(43) Date of publication of application: **23.12.2020**
(21) Application number: 19209063.7
(22) Date of filing: 14.11.2019
(51) Int. Cl.: F16B 19/00

(54) **UNITARY FIXING RIVET**

(30) Priority: 19.06.2019 ES 201931037 U
(71) Applicant: Industrias Auxiliares, S.A., 20808 Getaria (ES)
(72) Inventor: AZPEITIA AZCARRAGA, Juan José, 20808 Getaria (Guipuzcoa) (ES)
(74) Representative: dompatent von Kreisler Selting Werner - Partnerschaft von Patent- und Rechtsanwälten mbB

(57) **Abstract**

Unitary fixing rivet used in the fastening holes (7) of sliding portions of furniture, which contains a rivet head (2) seated at the base of the sliding portion (8) and an anchoring trunk (6) in extension of said rivet head 5 (2) for joining with the furniture panel where the rivet head (2) consists of a seating support part (3) with the base of the sliding portion (8); an adjustment part (4) for insertion in the clamping hole (7) of the sliding portion (8) and of a diameter substantially smaller than the diameter of the clamping hole (7); and a locking part (5) for fixing against the lower surface of the slide base (8).

## Description

### Field of the invention

This invention concerns a unitary fixing rivet employed in the holding holes of sliding furniture in order to fix the sliding portion to the furniture panel, as necessary, one sole piece being necessary.

### State of the prior art

In reference to the current state of the art, it is known that screws are introduced into the fastening holes of the sliding portions which, together with plugs of plastic material introduced into a hole drilled into the wood of the furniture, fix the sliding portion to the furniture. However, with this this type of fixation it is necessary to use two pieces making the final assembly by the user more complicated, as well as increasing the cost of manufacturing and assembly.

Another current solution is to use a rivet with an anchor body with a diameter larger than the diameter of the fastening hole of the sliders and with the neck diameter below said anchor body and also to lower the holding hole of the sliding part; this is introduced into the hole for holding the sliding portion and, after applying pressure from the top of the base of the sliding portion, it generates a rivet head for fixing. However, this solution has the disadvantage that the force for the rivet is applied from the top of the base of the sliding portion and is more complicated, since the V or U shape of the rail of the slide is difficult to maneuver and it is therefore essential that it be performed by an operator during production, increasing the difficulty and manufacturing costs and preventing the automation of the assembly process in production. Another problem is that the diameter of the neck does not fully fit the diameter of the fastening hole of the sliding portion, creating gaps, which, together with the difference in size of said neck with the diameter of the anchor body, makes the fixation more fragile. It can even cause breakage and make this device less safe. In addition, the diameter of the anchor trunk must be greater than the standard diameter of the drills made in the furniture for the anchoring of the sliding portion, thus complicating the final assembly by the user, who must perform it using the correct drill diameter.

Therefore, the present invention seeks to provide a one-piece fixing rivet that allows for automation of production and facilitates the final assembly by the user, maintaining the standard diameter of the holes made in the furniture.

### Explanation of the invention and advantages

Against this state of the art, the present invention refers to a unitary fixing rivet used in the fastening holes of sliding portions of furniture, which contains a rivet head seated at the base of the sliding portion and an anchor trunk extending from said rivet head for connection with the furniture panel. The rivet head consists of a seat support part with the base of the sliding portion; an insertion adjustment part in the fastening hole of the slide and a diameter substantially smaller than the diameter of the fastening hole; and a locking closure part against the bottom surface of the base of the sliding portion.

Thanks to this configuration, unlike the usual rivet, a single piece is necessary for fixing the rivet to the sliding portion and this with the furniture, thus facilitating both the production and the final fixing on the furniture by the user such that one simply has to introduce the anchoring trunk in the drill holes commonly already made in the furniture. This configuration allows the production process to be automated by a machine without the need for an operator to place it in the fastening holes of the sliding portion and then rivet it. Another advantage of this configuration is that the diameter of the adjustment part of the rivet head, being substantially smaller than the diameter of the hole and of the same dimensions as the initial diameter of the closing part of the rivet head, facilitates the introduction by adjustment of the unitary fixing rivet in the fastening holes of the sliding portion. In addition, the adjustment part of the rivet head is susceptible to deformation until reaching the dimensions of the diameter of the clamping hole. Thus, a better adjustment of the adjustment part of the rivet head after riveting is achieved, further securing the fixation between the unitary fixing rivet and the base of the sliding portion. Additionally, thanks to the closing part of the rivet head being able to deform exceeding its initial diameter until reaching a diameter greater than that of the clamping hole, the fixing of the unitary fixing rivet to the unit is easily and safely achieved. Production can be automated, facilitating the final fixation of the sliding portion to the cabinet by the user, who only needs to enter the locking unitary trunk anchor rivet into the holes of the furniture, keeping the standard diameter of the drills without it being necessary to modify them as in other prior art solutions.

Another feature of the invention is that the closing part of the rivet head is capable of being deformed by the force applied by a pressure tool against the bottom of the base of the sliding portion, said pressure tool being an inner diameter bushing, equal to the diameter of the anchor trunk. Thanks to this configuration, it is possible to automate the production process because riveting is done from the bottom of the base of the slider and not from the top, without interfering with the rail of the sliding portion, making it possible to fix the unitary fixing rivet to the sliding portion with a machine, thus avoiding the need for in-line assembly by an operator, so providing a more secure, versatile and economical fixing.

Finally, another feature of the invention is that the anchoring trunk has staggered teeth for fixing to the furniture. Thanks to this configuration, the end user can easily fix the sliding portion to the furniture, introducing the anchoring trunk of the unitary fixing rivet to the furniture which, thanks to the staggered fixing teeth, will be fixed to the furniture by pressure without requiring any additional parts. Such staggered fixing teeth may adopt other usual solutions such as fixing fins to a fitting or a clipping fin or any other commonly used furniture fixing element.

### Drawings and References

To better understand the nature of the invention, the attached drawings present an arrangement that is merely illustrative and not limiting in nature:
Figure 1 shows a sectional view of the unitary fixing rivet (1) fixed on the sliding portion (8) after the riveting.
Figure 2 shows a sectional view of the unitary fixing rivet (1) fixed in the sliding portion (8) before the riveting, with the closure part (5) of the rivet head (2) even with the same diameter as the adjustment part (4) of the rivet head (2).
Figure 3 shows a view in enlarged detail of the unitary fixing rivet (1) where you can see that the diameter of the adjustment portion (4) of the rivet head (2) is substantially smaller than the diameter of the attachment hole of the sliding portion (8).
Figure 4 shows a sectional view of the unitary fixing rivet (1) with a pressure tool (9) and a stop tool (10) for the final riveting.
Figure 5 shows an enlarged detail view of the unitary fixing rivet (1) with a pressure tool (9) and a stopper tool (10) after the riveting.

The following references are indicated in these figures:
1. Unitary fixing rivet
2. Rivet head
3. Support part of the rivet head (2)
4. Adjustment part of the rivet head (2)
5. Part for fixing the rivet head (2)
6. Anchoring trunk
7. Clamping hole of the sliding portion (8)
8. Sliding portion
9. Pressure tool
10.Stopper tool
11.Staggered fixing teeth

### Description of the preferred arrangement

In relation to the drawings and references listed above, a preferred arrangement of the object of the invention is illustrated in the attached drawings , referring to a unitary fixing rivet used in the fastening holes (7) of furniture slides, that contains a rivet head (2) seated on the base of the sliding portion (8) and a trunk anchor (6) in extension of said rivet head (2) for attachment to the panel casing; and that the rivet head (2) consists of a seat support part (3) with the base of the sliding portion (8); an adjustment part (4) for insertion into the clamping hole (7) of the sliding portion (8) and of a diameter substantially smaller than the diameter of the clamping hole (7); and a locking part (5) for fixing against the bottom surface of the base of the sliding portion (8).

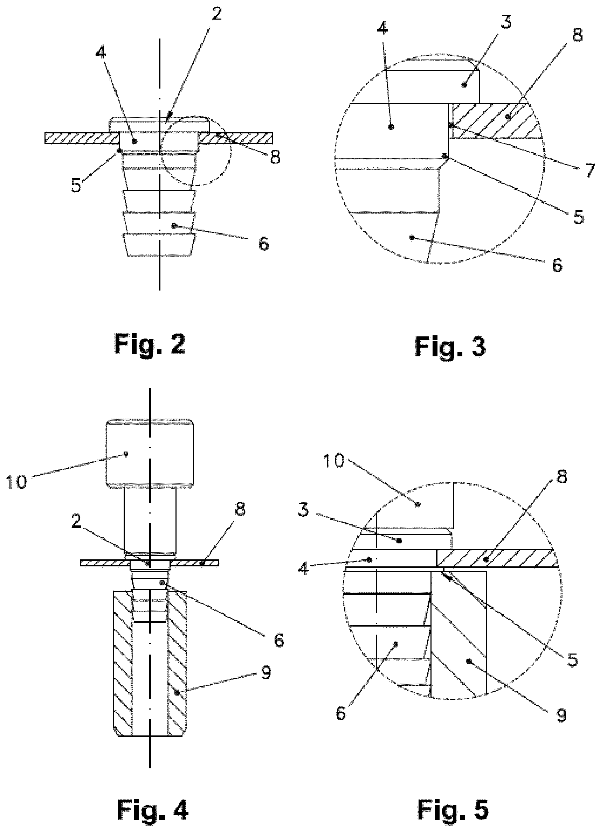

As can be seen in Figure 2, the unitary fixing rivet (1) is inserted into the fastening hole (7) of the sliding portion (8), the diameter of the adjustment part (4) of the rivet head being initially (2) the same diameter as the closing part (5) of the rivet head (2) and larger than the diameter of the trunk anchor (6). In addition, as can be seen in Figure 3, the diameter of the adjustment part (4) of the rivet head (2) is initially substantially smaller than the diameter of the fastening hole (7) of the sliding portion (8). Thus, the introduction by adjustment of the unitary fixing rivet (1) in the base of the sliding portion (8) is facilitated.

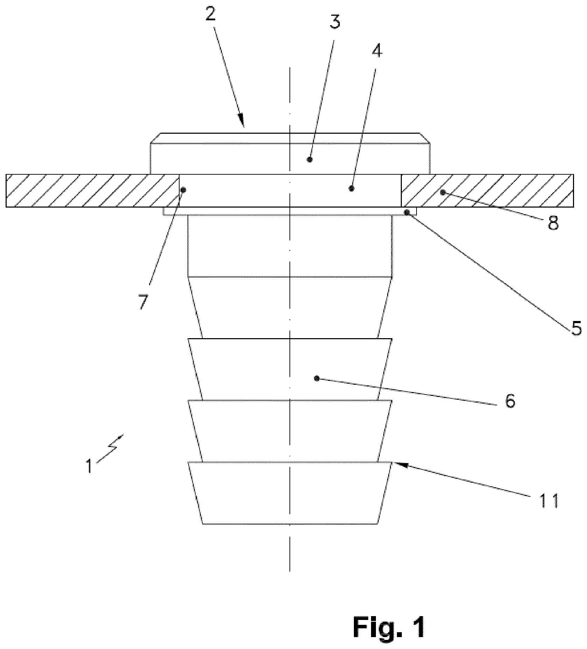

Subsequently, as can be seen in Figure 4 in an automated way, a machine positions a stopper tool (10) in the support part (3) of the rivet head (2) and by means of a pressure tool (9) exerts a force against the closing part (5) of the rivet head (2). Thus, as can be seen in Figures 1 and 5, said closure part (5) of the rivet head (2) is deformed against the bottom surface of the base of the sliding portion (8) deforming to a diameter greater than the diameter of the fastening hole (7) of the sliding portion (8) and thus fixing the unitary fixing rivet (1) to the sliding portion (8). Furthermore, due to the force exerted by the pressing tool (9), the adjustment part (4) of the rivet head (2) is deformed to expand to the dimensions of the diameter of the clamping bore (7) of the sliding portion (8), thus achieving a perfect fit without gaps.

Thus, the sliding portion (8) will be ready for final assembly by the user. Thanks to the staggered fixing teeth (11) of the unitary fixing rivet (1), the sliding portion (8) will be secured to the furniture panel by simply placing the anchoring trunk (6) in the holes of the furniture. Variations in materials, shape, size and arrangement of the component elements, described in a non-limiting manner, do not alter the essentiality of this invention, being sufficient to proceed to its reproduction by an expert.

## Claims

1. Unitary fixing rivet employed in the fastening holes (7) of furniture slides, which contains a rivet head (2) seated at the base of the sliding portion (8) and an anchoring trunk (6) in extension of said rivet head (2) for connection with the furniture panel, **characterized in that** the rivet head (2) consists of a seat support part (3) with the base of the sliding portion (8); an adjustment part (4) for insertion into the clamping hole (7) of the sliding portion (8) and of a diameter substantially smaller than the diameter of the clamping hole (7); and a closure part (5) fixing against the bottom surface of the base of the sliding portion (8).

2. Unitary fixing rivet (1) according to claim 1, **characterized in that** the adjustment part (4) of the rivet head (2) is capable of deforming until reaching the dimensions of the diameter of the clamping hole (7), and the closing part (5) of the rivet head (2) is susceptible to deformation exceeding its initial diameter until reaching a until a diameter greater than that of the holding hole (7) is reached.

3. Unitary fixing rivet (1) according to any of the claims above, **characterized in that** the closing part (5) of the rivet head (2) is susceptible to deformation by the force applied by a pressure tool (9) against the bottom part of the base of the sliding portion (8), said pressure tool (9) being a bushing of inner diameter equal to the diameter of the anchor trunk (6).

4. Unitary fixing rivet (1) according to any of the claims above, **characterized in that** the anchoring trunk (6) has staggered fixing teeth (11) for the furniture.
